# EUROPÄISCHE PATENTSCHRIFT

(11) **EP 0 738 615 B1**
(45) Veröffentlichungstag und Bekanntmachung des Hinweises auf die Patenterteilung: **15.09.1999**
(21) Anmeldenummer: 96890060.5
(22) Anmeldetag: 29.03.1996
(51) Int. Cl.: B60C 9/20

(54) **Fahrzeugluftreifen**
Vehicle tyre
Bandage pneumatique pour véhicule

(30) Priorität: 21.04.1995 AT 68795
(43) Veröffentlichungstag der Anmeldung: 23.10.1996
(73) Patentinhaber: Semperit Reifen Aktiengesellschaft, A-2514 Traiskirchen (AT)
(72) Erfinder: Lux, Friedrich, Dipl.-Ing., 2700 Wr. Neustadt (AT)
(74) Vertreter: Vinazzer, Edith, Dipl.-Ing.

(56) Entgegenhaltungen:
- EP-A- 0 435 465
- EP-A- 0 652 118
- DE-A- 3 407 874
- FR-A- 2 584 343
- FR-A- 2 663 265
- GB-A- 2 072 590
- US-A- 3 945 422

## Beschreibung

Die vorliegende Erfindung betrifft einen Fahrzeugluftreifen in Radialbauart mit einem Laufstreifen, einem Paar von Seitenwänden, einem Paar von verstärkten Wulstbereichen, einer insbesonderen einlagigen Karkasse und einem Gürtel, der zwei Lagen von in Gummi eingebetteten Stahlcorden umfaßt, die innerhalb jeder Gürtellage parallel zueinander verlaufen, wobei sich die Summe der Querschnittsflächen der Stahlcorde, bezogen auf dieselbe Breite der Gürtellagen, sich in diesen beiden Gürtellagen voneinander unterscheidet.

In den letzten Jahren wurden Maßnahmen, die eine Gewichtsreduktion von PKW-Reifen bewirken, verstärkt Aufmerksamkeit gegeben. Es ist bekannt, daß eine Verringerung des Reifengewichtes mit einer Verringerung des Rollwiderstandes einhergeht, was unmittelbar auch eine Herabsetzung des Treibstoffverbrauches von Kraftfahrzeugen mit sich bringt. Ein nicht unerheblicher Beitrag zur Höhe des Reifengesamtgewichtes kommt auch von den im Reifenkörper eingebetteten Festigkeitsträgem, somit dem Stahlcord in den Gürtellagen und, in einem etwas geringerem Ausmaß, von den Corden in den Karkassenlagen. Ein moderner PKW-Reifen in Leichtbauart besitzt nach wie vor im allgemeinen zwei Gürtellagen mit Festigkeitsträgem aus Stahlcord. Dabei wird beispielsweise ein Stahlcord der Konstruktion 1 x 2 eingesetzt, wo somit der Stahlcord aus zwei miteinander verdrillten Stahlfilamenten besteht, deren Durchmesser üblicherweise ca. 0,3 mm gewählt wird. Bekannt ist dabei ein Reifen, bei dem die beiden Stahlcordlagen eine Fadenteilung (Anzahl der Corde pro 10 cm Breite in einer Gürtellage) etwa 80 beträgt. Dieser moderne PKW-Leichtreifen besitzt daher gegenüber den sonst üblichen Gürtellagenkonstruktionen, wo eine Fadenteilung von 90 bis 110 üblich ist, eine leichtere und das Gewicht des Reifens reduzierende Anordnung. Es hat sich herausgestellt, daß diese Leichtreifen volle Hochgeschwindigkeitstauglichkeit und Dauerlaufhaltbarkeit aufweisen, einen gegenüber herkömmlichen Reifen verringerten Rollwiderstand besitzen und in den sonstigen Reifeneigenschaften gegenüber den bekannten Reifen keine Nachteile aufweisen.

Ein Reifen der eingangs genannten Art ist beispielsweise aus der EP-A 0435465 bekannt. Der Gürtel dieses Reifens umfaßt zwei Gürtellagen, von welchen die radial weiter innen gelegene Gürtellage pro Einheitsbreite und Umfangseinheitslänge eine geringere Stahlmenge enthält, als die radial weiter außen gelegene Gürtellage. In der äußeren Gürtellage soll dabei die Gesamtheit der Querschnittsflächen der Stahlcorde in einem Bereich zwischen 14 bis 28 mm² pro 100 mm Gürtelbreite liegen. Von der Stahlmenge her ist daher zumindest die radial äußere Lage massiv gestaltet und, gegenüber dem oben beschriebenen Leichtreifen, als schwer zu bezeichnen. Dadurch, daß die äußere Lage nicht nur als schwer einzustufen ist sondern auch gegenüber der inneren Lage um einiges schwerer ist besitzt der Reifen eine ungünstige Massenverteilung im Gürtel, die rollwiderstandserhöhend wirkt und auch im Handling und Fahrkomfort Nachteile mit sich bringt.

Die Erfindung hat sich nun die Aufgabe gestellt, im Gürtelbereich eines Reifens weitere gewichtsreduzierende Maßnahmen zu treffen, die über den bei dem oben beschriebenen Leichtreifen getroffenen Maßnahmen hinausgehen und insbesondere Rollwiderstand und Fahrkomfort positiv beeinflussen. Die erforderliche Hochgeschwindigkeitsfestigkeit und die Dauerhaltbarkeit des Reifens sollen weiterhin gegeben sein.

Gelöst wird die gestellte Aufgabe erfindungsgemäß dadurch, daß in der radial äußeren Gürtellage die Summe der Querschnittsflächen der Stahlcorde 5 bis 10 mm² und in der radial inneren Gürtellage die Summe der Querschnittsflächen der Stahlcorde 7 bis 12 mm², jeweils pro 10 cm Gürtelbreite beträgt, wobei die Summe der Querschnittsflächen in der radial äußeren Gürtellage um mindestens 1,5 mm² kleiner ist als in der radial inneren Gürtellage.

Mit der erfindungsgemäßen Auslegung der beiden Gürtellagen wird eine weitere Material- und somit Gewichtsreduktion erzielt, die sich auf eine Senkung des Rollwiderstandes auswirkt. Einen positiven Effekt hat ferner die erfindungsgemäße Masse- bzw. Gewichtsverteilung in den beiden Gürtellagen. Die äußere Gürtellage ist nämlich so ausgelegt, daß sie im Verhältnis zur inneren Gürtellage aufgrund der kleineren Stahl-cordquerschnittsfläche über die Einheitsbreite und der kleineren Stahlcordmasse ein verhältnismäßig günstigeres Massenträgheitsmoment besitzt. Ein Reifen mit einer erfindungsgemäßen Gürtelauslegung hat auch einen verbesserten Fahrkomfort und ein verbessertes Handlingverhalten. Die Eignung des Reifens für die seinem Speed-Index entsprechende Geschwindigkeit und seine erforderliche Dauerhaltbarkeit bleiben trotz weiterer Reduzierung an Masse von Festigkeitsträgem im Gürtel erhalten.

Gemäß einer bevorzugten Ausführungsform der Erfindung beträgt die Differenz der Summen der Querschnittsflächen mindestens 2 mm².

Eine Ausführungsvariante der Erfindung besteht darin, daß die Stahlcorde in beiden Gürtellagen die gleiche Konstruktion aufweisen, jedoch mit unterschiedlicher Fadendichte angeordnet sind. Beide Gürtellagen besitzen somit ein im wesentlichen übereinstimmendes Eigenschwingverhalten, was im Reifen/Fahrbahngeräusch Vorteile bringt.

Bei einer zweiten erfindungsgemäßen Variante ist vorgesehen, daß die Stahlcorde in den beiden Gürtellagen voneinander verschiedene Konstruktionen besitzen und entweder mit übereinstimmender Fadendichte oder mit unterschiedlicher Fadendichte angeordnet sind. Diese Ausführungsformen bieten günstigerweise die Möglichkeit, Stahlcordkonstruktionen zu wählen, die eine dünnere Lagengummierung zulassen, was ebenfalls einen Beitrag zur Gewichtsreduktion leistet.

Gemäß einer bevorzugten Ausführungsform der Erfindung wird in beiden Gürtellagen Stahlcord eingesetzt, dessen Filamentanzahl ≤ 4, insbesondere ≤ 3 ist. Dabei ist es von besonderem Vorteil, wenn in zumindest einer der Gürtellagen ein Stahlcord einer 1 x 2 Konstruktion, dessen Einzelfilamente einen Durchmesser zwischen 0,28 und 0,35 mm besitzen, eingesetzt wird. Auch der Einsatz eines Einzeldrahtes ist möglich, wobei dieser insbesondere in der radial äußeren Gürtellage verwendet wird. Ein solcher Einzeldraht sollte einen Durchmesser zwischen 0,25 und 0,4 mm besitzen.

Eine dünne Gummierung der Gürtellagen ist auch dann möglich, wenn als Einzeldraht ein Flachdraht eingesetzt wird. Für eine Optimierung bzw. günstige Beeinflussung des Handlingsverhaltens des Reifens ist es ferner von Vorteil, wenn die Stahlcorde in der radial äußeren Gürtellage einen um insbesondere mindestens 2° größeren Winkel mit der Reifenumfangsrichtung einschließen als die Stahlcorde in der radial inneren Gürtellagen. Bevorzugt wird dabei der Winkel der Stahlcorde in der radial äußeren Lage 22 bis 28°, der Winkel der Stahlcorde in der radial inneren Lage 18 bis 25° gewählt. Insbesondere für Cordkonstruktionen mit einer Filamentanzahl ≤ 3 ist es von Vorteil, wenn ein Cord gewählt wird, dessen Zugfestigkeit zwischen 2.700 und 4.100 N/mm² beträgt. Diese Zugfestigkeit charakterisiert sogenannte high tensile Corde, bei denen der Stahl mehr als 0,8 Gewichtsprozent Kohlenstoff, insbesondere bis zu etwa 0,92 Gewichtsprozent Kohlenstoff, enthält.

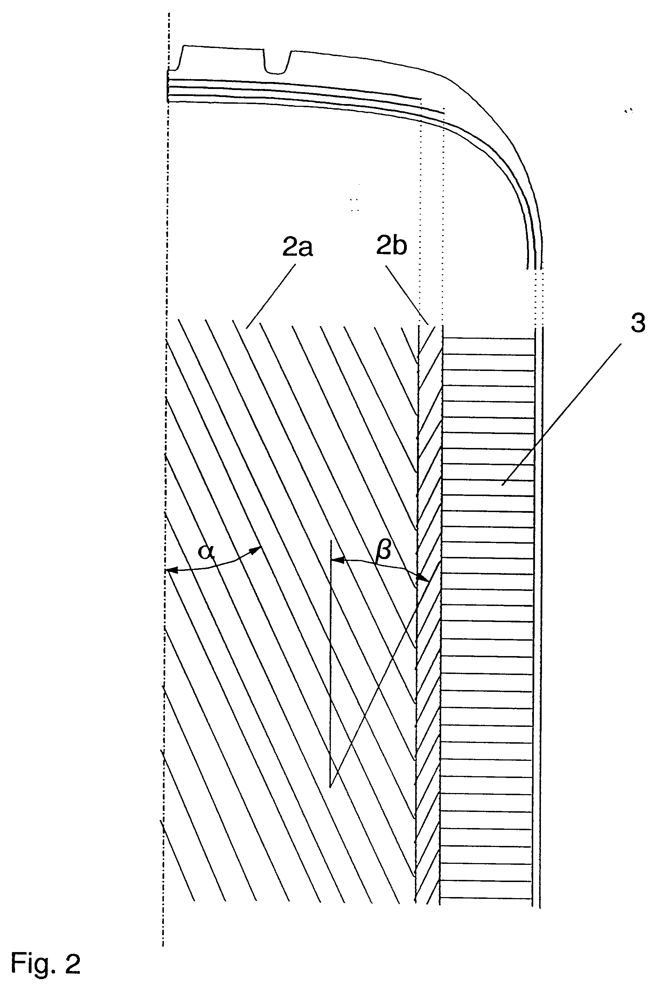

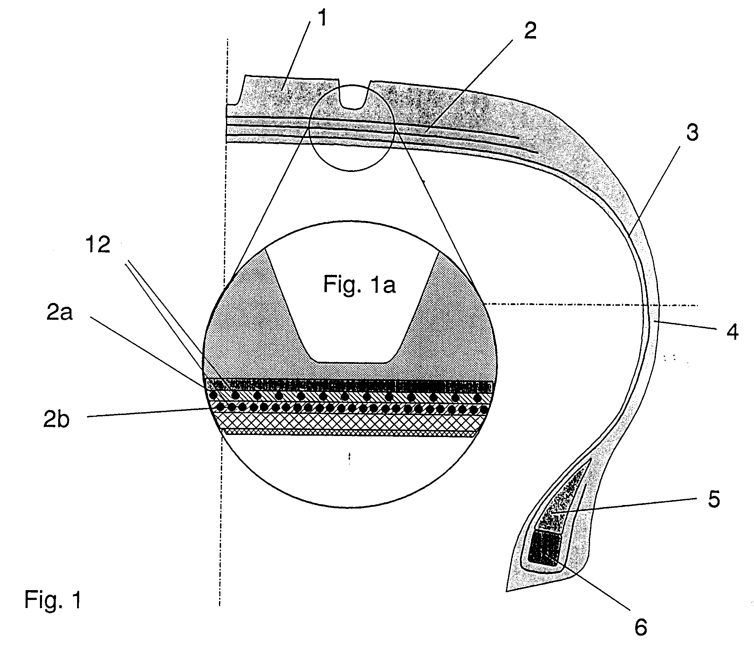

Die Erfindung wird nun im folgenden und anhand der Zeichnungsfiguren näher erläutert. Dabei zeigt Fig. 1 schematisch einen Querschnitt durch die Hälfte eines Fahrzeugluftreifens, Fig. 1a ein vergrößertes Detail aus Fig. 1 und Fig. 2 schematisch eine Draufsicht auf den Gürtelverband. Wie aus Fig. 1 ersichtlich ist, weist der Reifen einen Laufstreifen 1, einen Gürtel 2, eine einlagige Karkasse 3. zwei Seitenwände 4 und zwei Wulstbereiche 5 mit Wulstkernen 6 auf.

Der zwischen dem Laufstreifen 1 und der Karkasse 3 angeordnete Gürtel 2 besteht aus zwei Gürtellagen 2a, 2b, die jeweils aus in Gummi eingebetteten Stahlcordfestigkeitsträgern bestehen. Die Stahlcorde 12 verlaufen in jeder Lage 2a, 2b parallel zueinander und, relativ zur Umfangsrichtung des Reifens betrachtet unter vergleichsweise kleinen Winkeln α, β, wobei die Corde der beiden Lagen 2a, 2b einander kreuzen. Der Winkel α wird in einem Bereich von 22 bis 28° gewählt und ist vorzugsweise um mindestens 2° größer als der Winkel β, der 18 bis 25° beträgt.

Nach der vorliegenden Erfindung erfolgt die Ausgestaltung der Gürtellagen bzw. die Anordnung der Stahlcorde 12 in den Gürtellagen 2a, 2b derart, daß in der radial äußeren Lage 2a weniger Stahlcordmasse bzw. Stahlcordquerschnittsfläche, bezogen auf eine gewisse Einheitsbreite des Gürtels vorhanden ist, als in der radial inneren Gürtellage 2b. Die angestrebte Gewichtsreduktion und Senkung des Rollwiderstandes ohne Beeinträchtigung von Dauerhaltbarkeit sowie weiteren Reifeneigenschaften läßt sich ohne weiteres dann realisieren, wenn in der oberen Gürtellage die Summe der Querschnittsflächen der Stahlcorde pro 10 cm Lagenbreite 5 bis 10 mm² beträgt und in der radial inneren Gürtellage 2b 7 bis 12 mm², wobei die Differenz mindestens 1,5 mm², insbesondere mindestens 2 mm², betragen sollte. Bei einer möglichen Ausführungsform der Erfindung ist vorgesehen, daß die Stahlcorde in beiden Gürtellagen die gleiche Konstruktion aufweisen, jedoch unterschiedliche Fadendichten (Anzahl der Corde pro 10 cm Gürtelbreite = epdm) besitzen. Besonders günstige Konstruktionen und Anordnungen im Gürtel sind beispielsweise:

| | **Konstruktion** | **Fadendichte (epdm)** |
|---|---|---|
| radial äußere Gürtellage | 2 x 0,30 mm | 65 |
| radial innere Gürtellage | 2 x 0,30 mm | 85 |
| radial äußere Gürtellage | 2 x 0,28 mm | 60 |
| radial innere Gürtellage | 2 x 0,28 mm | 85 |

Alternativ dazu können in den beiden Gürtellagen Stahlcorde unterschiedlicher Konstruktion in einer Anordnung mit gleicher Fadenteilung eingesetzt werden. Mögliche vorteilhafte Ausgestaltungen sind dabei folgende:

| | **Konstruktion** | **Fadendichte (epdm)** |
|---|---|---|
| radial äußere Gürtellage | 2 x 0,28 mm | 65 |
| radial innere Gürtellage | 2 x 0,32 mm | 65 |
| radial äußere Gürtellage | 2 x 0,28 mm | 70 |
| radial innere Gürtellage | 2 x 0,30 mm | 70 |

Schließlich ist es auch möglich, in beiden Gürtellagen Stahlcorde unterschiedlicher Konstruktion vorzusehen und diese auch mit unterschiedlicher Fadenteilung anzuordnen. Bei einer solchen Ausgestaltung ist der Einsatz von Monofilamenten (Einzeldrähten) mit bevorzugtem Durchmesser von 0,25 bis 0,4 mm insbesondere in der radial äußeren Gürtellage von besonderem Vorteil. Bevorzugte Ausgestaltungen sind:

| | **Konstruktion** | **Fadendichte (epdm)** |
|---|---|---|
| radial äußere Gürtellage | 2 x 0,28 mm | 65 |
| radial innere Gürtellage | 1 x 0,30 mm | 145 |
| radial äußere Gürtellage | 1 x 0,30 mm | 125 |
| radial innere Gürtellage | 2 x 0,32 mm | 65 |

Anstelle von Monofilamenten mit kreisförmigem Querschnitt kann auch ein Flachdraht eingesetzt werden. Ein solcher Flachdraht kann beispielsweise eine Querschnittsfläche von 0,05 mm² bis 0,2 mm² besitzen. Ein Flachdraht mit rechteckigem Querschnitt wird etwa so ausgeführt, daß seine Breite 0,4 bis 0,6 mm und seine Höhe 0,28 bis 0,34 mm beträgt. Auch Flachdrähte mit zumindest im wesentlichen elliptischem Querschnitt können Verwendung finden.

Der Gürtelverband eines erfindungsgemäßen Reifens kann weitere Lagen, beispielsweise eine Abdecklage mit Nylonfäden oder dergleichen, umfassen.

## Patentansprüche

1. Fahrzeugluftreifen in Radialbauart mit einem Laufstreifen (1), einem Paar von Seitenwänden (4), einem Paar von verstärkten Wulstbereichen (5), einer insbesonderen einlagigen Karkasse (3) und einem Gürtel (2), der zwei Lagen (2a, 2b) von in Gummi eingebetteten Stahlcorden (12) umfaßt, die innerhalb jeder Gürtellage (2a, 2b) parallel zueinander verlaufen, wobei sich die Summe der Querschnittsflächen der Stahlcorde (12), bezogen auf eine axiale Einheitsbreite der Gürtellagen (2a, 2b), sich in diesen beiden Gürtellagen voneinander unterscheidet, dadurch gekennzeichnet, daß in der radial äußeren Gürtellage (2a) die Summe der Querschnittsflächen der Stahlcorde 5 bis 10 mm² und in der radial inneren Gürtellage (2b) die Summe der Querschnittsflächen der Stahlcorde 7 bis 12 mm² beträgt, jeweils bezogen auf eine Einheitsbreite der Gürtellagen von 10 cm, wobei die Summe der Querschnittsflächen in der radial äußeren Gürtellage (2a) um mindestens 1,5 mm² kleiner ist als in der radial inneren Gürtellage (2b).

2. Fahrzeugluftreifen nach Anspruch 1, dadurch gekennzeichnet, daß die Differenz der Summen der Querschnittsflächen mindestens 2 mm² beträgt.

3. Fahrzeugluftreifen nach Anspruch 1 oder Anspruch 2, dadurch gekennzeichnet, daß die Stahlcorde in beiden Gürtellagen (2a, 2b) die gleiche Konstruktion aufweisen, jedoch mit unterschiedlicher Fadendichte angeordnet sind.

4. Fahrzeugluftreifen nach Anspruch 1 oder Anspruch 2, dadurch gekennzeichnet, daß die Stahlcorde in den beiden Gürtellagen (2a, 2b) voneinander verschiedene Konstruktionen besitzen und entweder mit übereinstimmender Fadendichte oder mit unterschiedlicher Fadendichte angeordnet sind.

5. Fahrzeugluftreifen nach einem der Ansprüche 1 bis 4, dadurch gekennzeichnet, daß der Stahlcord in den Gürtellagen (2a, 2b) eine Gesamtfilamentanzahl ≤ 4, insbesondere ≤ 3, besitzt.

6. Fahrzeugluftreifen nach einem der Ansprüche 1 bis 5, dadurch gekennzeichnet, daß in zumindest einer der Gürtellagen (2a, 2b) ein Stahlcord der Konstruktion 1 x 2 eingesetzt ist, wobei der Filamentdurchmesser zwischen 0,28 bis 0,35 mm beträgt.

7. Fahrzeugluftreifen nach einem der Ansprüche 1 bis 5, dadurch gekennzeichnet, daß in zumindest einer der Gürtellagen (2a, 2b), insbesondere in der radial äußeren Gürtellage (2a), ein Einzeldraht eingesetzt ist.

8. Fahrzeugluftreifen nach Anspruch 7, dadurch gekennzeichnet, daß der Einzeldraht einen kreisförmigen Querschnitt besitzt und einen Durchmesser von 0,25 bis 0,4 mm aufweist.

9. Fahrzeugluftreifen nach Anspruch 7, dadurch gekennzeichnet, daß der Einzeldraht ein Flachdraht mit rechteckigem oder im wesentlichen elliptischem Querschnitt ist.

10. Fahrzeugluftreifen nach einem der Ansprüche 1 bis 9, dadurch gekennzeichnet, daß die Stahlcorde in der radial äußeren Gürtellage (2a) mit der Reifenumfangsrichtung einen, um vorzugsweise mindestens 2° größeren Winkel (α) einschließen als die Stahlcorde in der radial inneren Gürtellage (2b).

11. Fahrzeugluftreifen nach einem der Ansprüche 1 bis 10, dadurch gekennzeichnet, daß die Stahlcorde in der radial äußeren Gürtellage (2a) einen Winkel (α) von 22 bis 28° mit der Reifenumfangsrichtung einschließen und die Stahlcorde in der radial inneren Gürtellage (2b) einen Winkel (β) von 18 bis 25° mit der Reifenumfangsrichtung einschließen.

12. Fahrzeugluftreifen nach einem der Ansprüche 1 bis 11, dadurch gekennzeichnet, daß ein Stahlcord mit einer Zugfestigkeit zwischen 2.700 und 4.100 N/mm² eingesetzt wird.

## Claims

1. Pneumatic vehicle tyre of a radial type of construction, having a tread strip (1), a pair of sidewalls (4), a pair of reinforced bead regions (5), a carcase (3) which is more especially single-ply, and a belt (2) which includes two plies (2a, 2b) of steel cords (12), which are embedded in rubber and extend parallel to one another within each belt ply (2a, 2b), the sums of the cross-sectional areas of the steel cords (12), relative to an axial unit width of the belt plies (2a, 2b), differing from one another in these two belt plies, characterised in that the sum of the cross-sectional areas of the steel cords is 5 to 10 mm² in the radially external belt ply (2a), and the sum of the cross-sectional areas of the steel cords is 7 to 12 mm² in the radially internal belt ply (2b), relative to a unit width of the belt plies of 10 cm in each case, the sum of the cross-sectional areas in the radially external belt ply (2a) being at least 1.5 mm² smaller than in the radially internal belt ply (2b).

2. Pneumatic vehicle tyre according to claim 1, characterised in that the difference in the sums of the cross-sectional areas is at least 2 mm².

3. Pneumatic vehicle tyre according to claim 1 or claim 2, characterized in that the steel cords in both belt plies (2a, 2b) have the same construction, but are provided with a different filament density.

4. Pneumatic vehicle tyre according to claim 1 or claim 2, characterized in that the steel cords in the two belt plies (2a, 2b) have consructions which differ from one another and are provided either with an identical filament density or with a different filament density.

5. Pneumatic vehicle tyre according to one of claims 1 to 4, characterised in that the steel cord in the belt plies (2a, 2b) has a total number of filaments ≤ 4, more especially ≤ 3.

6. Pneumatic vehicle tyre according to one of claims 1 to 5, characterized in that a steel cord of the construction 1 x 2 is used in at least one of the belt plies (2a, 2b), the filament diameter being between 0.28 and 0.35 mm.

7. Pneumatic vehicle tyre according to one of claims 1 to 5, characterised in that an individual wire is used in at least one of the belt plies (2a, 2b), more especially in the radially external belt ply (2a).

8. Pneumatic vehicle tyre according to claim 7, characterized in that the individual wire has a circular cross-section and a diameter of 0.25 to 0.4 mm.

9. Pneumatic vehicle tyre according to claim 7, characterised in that the individual wire is a flat wire having a rectangular or substantially elliptical cross-section.

10. Pneumatic vehicle tyre according to one of claims 1 to 9, characterised in that the steel cords in the radially external belt ply (2a) form with the circumferential direction of the tyre an angle (α) which is preferably at least 2° greater than that formed by the steel cords in the radially internal belt ply (2b).

11. Pneumatic vehicle tyre according to one of claims 1 to 10, characterised in that the steel cords in the radially external belt ply (2a) form an angle (α) of 22 to 28° with the circumferential direction of the tyre, and the steel cords in the radially internal belt ply (2b) form an angle (β) of 18 to 25° with the circumferential direction of the tyre.

12. Pneumatic vehicle tyre according to one of claims 1 to 11, characterized in that a steel cord is used having a tensile strength between 2,700 and 4,100 N/mm².

## Revendications

1. Bandage pneumatique pour véhicule, doté d'une structure radiale comprenant une bande de roulement (1), une paire de flancs (4), une paire de zones d'épaulement renforcées (5), une carcasse (3) notamment à couche unique, et une ceinture (2) englobant deux couches (2a, 2b) de câblés d'acier (12) noyés dans du caoutchouc et s'étendant parallèlement les uns aux autres à l'intérieur de chaque couche (2a, 2b) de la ceinture, la somme des superficies de section transversale des câbles d'acier (12) différant mutuellement dans ces deux couches de la ceinture, par rapport à une largeur axiale unitaire desdites couches (2a, 2b) de la ceinture, caractérisé par le fait que, dans la couche de ceinture (2a) radialement extérieure, la somme des superficies de section transversale des câblés d'acier est de 5 à 10 mm² et, dans la couche de ceinture (2b) radialement intérieure, la somme des superficies de section transversale desdits câblés d'acier est de 7 à 12 mm², respectivement par rapport à une largeur unitaire de 10 cm desdites couches de ceinture, la somme des superficies de section transversale, dans la couche de ceinture (2a) radialement extérieure, étant inférieure d'au moins 1,5 mm² à celle située dans la couche de ceinture (2b) radialement intérieure.

2. Bandage pneumatique pour véhicule, selon la revendication 1, caractérisé par le fait que la différence des sommes des superficies de section transversale est d'au moins 2 mm².

3. Bandage pneumatique pour véhicule, selon la revendication 1 ou la revendication 2, caractérisé par le fait que les câblés d'acier présentent la même structure dans les deux couches (2a, 2b) de la ceinture, mais sont toutefois agencés avec une densité de fils différente.

4. Bandage pneumatique pour véhicule, selon la revendication 1 ou la revendication 2, caractérisé par le fait que les câblés d'acier possèdent des structures mutuellement différentes dans les deux couches (2a, 2b) de la ceinture, et sont agencés soit avec une densité de fils concordante, soit avec une densité de fils différente.

5. Bandage pneumatique pour véhicule, selon l'une des revendications 1 à 4, caractérisé par le fait que le câblé d'acier possède, dans les couches (2a, 2b) de la ceinture, un nombre total de filaments ≤ 4, en particulier ≤ 3.

6. Bandage pneumatique pour véhicule, selon l'une des revendications 1 à 5, caractérisé par le fait qu'un câblé d'acier de structure 1 x 2 est intégré dans au moins l'une des couches (2a, 2b) de la ceinture, le diamètre des filaments étant compris entre 0,28 et 0,35 mm.

7. Bandage pneumatique pour véhicule, selon l'une des revendications 1 à 5, caractérisé par le fait qu'un fil métallique unique est intégré dans au moins l'une des couches (2a, 2b) de la ceinture, notamment dans la couche de ceinture (2a) radialement extérieure.

8. Bandage pneumatique pour véhicule, selon la revendication 7, caractérisé par le fait que le fil métallique unique possède une section transversale ronde, et présente un diamètre de 0,25 à 0,4 mm.

9. Bandage pneumatique pour véhicule, selon la revendication 7, caractérisé par le fait que le fil métallique unique est un fil métallique aplati, de section transversale rectangulaire ou pour l'essentiel elliptique.

10. Bandage pneumatique pour véhicule, selon l'une des revendications 1 à 9, caractérisé par le fait que les câblés d'acier décrivent avec la direction périphérique dudit bandage, dans la couche de ceinture (2a) radialement extérieure, un angle (α) préférentiellement supérieur d'au moins 2° à celui des câblés d'acier dans la couche de ceinture (2b) radialement intérieure.

11. Bandage pneumatique pour véhicule, selon l'une des revendications 1 à 10, caractérisé par le fait que les câblés d'acier décrivent un angle (α) de 22 à 28° avec la direction périphérique dudit bandage, dans la couche de ceinture (2a) radialement extérieure, et les câblés d'acier décrivent un angle (β) de 18 à 25° avec ladite direction périphérique du bandage dans la couche de ceinture (2b) radialement intérieure.

12. Bandage pneumatique pour véhicule, selon l'une des revendications 1 à 11, caractérisé par le fait qu'on utilise un câblé d'acier présentant une résistance à la traction comprise entre 2 700 et 4 100 N/mm².
